Europäisches Patentamt

European Patent Office

Office européen des brevets

(11) Veröffentlichungsnummer: **0 172 146**
**A1**

(12) # EUROPÄISCHE PATENTANMELDUNG

(21) Anmeldenummer: 85830208.6

(22) Anmeldetag: 30.07.85

(51) Int. Cl.⁴: **A 47 C 17/80**

(30) Priorität: 31.07.84 IT 4867184

(43) Veröffentlichungstag der Anmeldung:
19.02.86 Patentblatt 86/8

(84) Benannte Vertragsstaaten:
AT BE CH DE FR LI LU NL SE

(71) Anmelder: Crocoli, Pietro
Via Filippo Serafini, 33
I-00173 Rom(IT)

(72) Erfinder: Crocoli, Pietro
Via Filippo Serafini, 33
I-00173 Rom(IT)

(74) Vertreter: Sneider, Enrico
Studio Lenzi Via Lucania, 13
I-00187 Roma(IT)

(54) Rückziehbares Verschwindbett.

(57) Das Bett ist aus zwei Strukturen gebildet, u.zw. eine an jeder von zwei entgegengesetzten Wänden feste Struktur und eine gegenüber der festen Struktur und den Wänden bewegliche Struktur, indem die feste Struktur aus einem Bindemittel der beweglichen Struktur tragenden Streichbalken (1) gebildet ist, während letztere aus einem Stützelement des ausgestreckten Bettes und aus einer Führung gebildet ist, in welcher die Anhäufungszapfen (10) der das Bett mit der dazugehörigen Matratze (6) bildenden Flächen (5) laufen, wobei die Flächen von untereinander an den Enden scharnierten und die vorgenannten Führungs- und Laufzapfen (10) tragenden Wangen (7) getragen sind. Das rückgezogene Verschwindbett nimmt in der Höhe erfindungsgemäss nur einen kleinen Teil des vom Bett im ausgestreckten Zustand eingenommenen Raumes ein.

EP 0 172 146 A1

./...

FIG 1

"Rückziehbares Verschwindbett"

Beschreibung

Es ist bekannt , dass es in sehr vielen Fällen notwendig oder auch nur nützlich ist tagsüber Räume andersartig als bei einer nächtlichen Nutzung zu verwenden .

Dies ist insbesondere bei Campers , Wohnanhängern , Booten , usw. der Fall , bei denen der für das Tagesleben zur Verfügung stehende Raum maximal sein soll , ebenso soll dies für den für die Ruhezeit bestimmten Raum zutreffen .

Es wurden hierbei verschiedene Lösungen angewandt , welche von den an der Wand angeordneten und mittels Rotation um die eigene Achse in Gebrauchslage gebrachten Betten bis zu den bei Nichtgebrauchslage zur Decke hin angehobenen Betten gehen . Alle bisher angewandten Lösungen weisen jedoch Mängel und Übelstände auf . Insbesondere die zur Decke hin angehobenen Betten nötigen angesichts der kalibrierten Höhe des Fahrzeuges den Raum unter dem Bett bei angehobener Lage für die dortige Unterbringen von Sitzplätzen zu verwenden , da das Bett selbst die nutzbare Höhe verringert .

Es wurde herausgefunden , dass bei Fahrzeugen , für die das erfindungsgemässige Bett besonders bestimmt ist ,

immer ein Raum vorhanden ist , welcher durch Bestimmung tagsüber von Sitzen eingenommen ist , während er nachts frei bleibt . Zum Beispiel bei Campers ist dies der Fall des für die Lenkung bestimmten Raumes , welcher naheliegenderweise durch Bestimmung nur sitzende Personen aufnimmt und nachts vollkommen leer bleibt . Zum Ausgleich ist der Raum in der Höhe immer übermässig und nicht verwertet .

Es ist daher die Aufgabe der vorliegenden Erfindung ein rückziehbares Verschwindbett zu schaffen , welches bei Nichtgebrauch einen beschränkten Raum der Decke eines Fahrzeuges , z.B. jener eines Fahrerhauses , einnimmt , und welches für den Gebrauch bis zur Höhe der Sitze herabgelassen werden kann , z.B. unter Einnahme des Raumes des Fahrerhauses neben dem im Fahrzeug erforderlichen Raum . Es ist hier wichtig hervorzuheben , dass die genannten Räume während des Tages für ihre üblichen Bestimmungen frei bleiben .

Erfindungsgemäss sind ein Verankerungsgerüst sowie Führungs- u. Stützmittel vorgesehen , welche an jeder Seite des Fahrzeuges zum Heben und Senken des Bettes in die rückgezogene Lage , bzw. in die Gebrauchslage , angeordnet sind .

Bezugnehmend auf die anliegenden Zeichnungen eines schematischen Ausführungsbeispieles wird die Erfindung bei der Durchsicht der nachstehenden Beschreibung besser zu verstehen sind . In den Zeichnungen selbst zeigen :

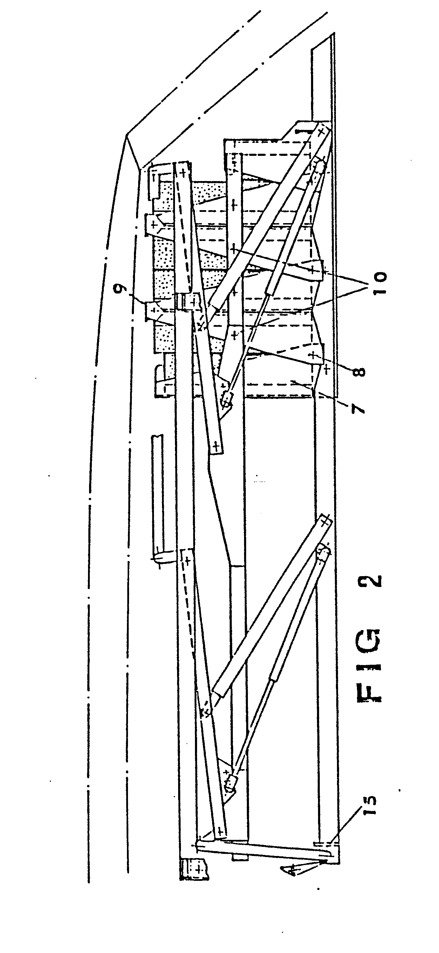

die Figuren 1 und 2 zwei Längsgesamtansichten des
erfindungsgemässen Bettes in offener bzw. geschlossener
Stellung ;

die Figuren 3 und 4 Queransichten des Bettes in geschlossener bzw. offener Stellung .

Unter Bezugnahme auf die Zeichnungen ist an jeder
Seitenwand des Fahrzeuges , z.B. eines Campers , in welchem das erfindungsgemässe Bett untergebracht ist , ein
Streichbalken 1 , im folgenden auch Verankerungsstruktur
genannt , befestigt , an dem mittels Arme 2,11 eine röhrenförmige oder nicht röhrenförmige Struktur 3 befestigt ist ,
an welcher sich das geöffnete Bett abstützt . Die entgegengesetzten Elemente 3 dieser Struktur  sind untereinander verfestigt und im Winkel gehalten durch eine
Fläche 15 , welche auch die untere Oberfläche des vom
geschlossenen Bett eingenommenen Raumes bildet .

Das Bett selbst besteht aus einer Reihe von faltbaren Flächen 5 , welche geeignet sind die Matratze 6 aufzunehmen und ihrerseits mit Wangen 7 versehen sind , welche an den dazugehörigen Enden 8,9 untereinander scharniert sind , derart um sich balgenartig ausbreiten oder
zusammenziehen zu können . Ungefähr in der Mitte ihrer
Länge ist jede Wange 7 mit Führungsorganen , z.B. mit Zapfen 10 , versehen , welche in der Lage sind in einer später erläuterten Führung 4 zu laufen .

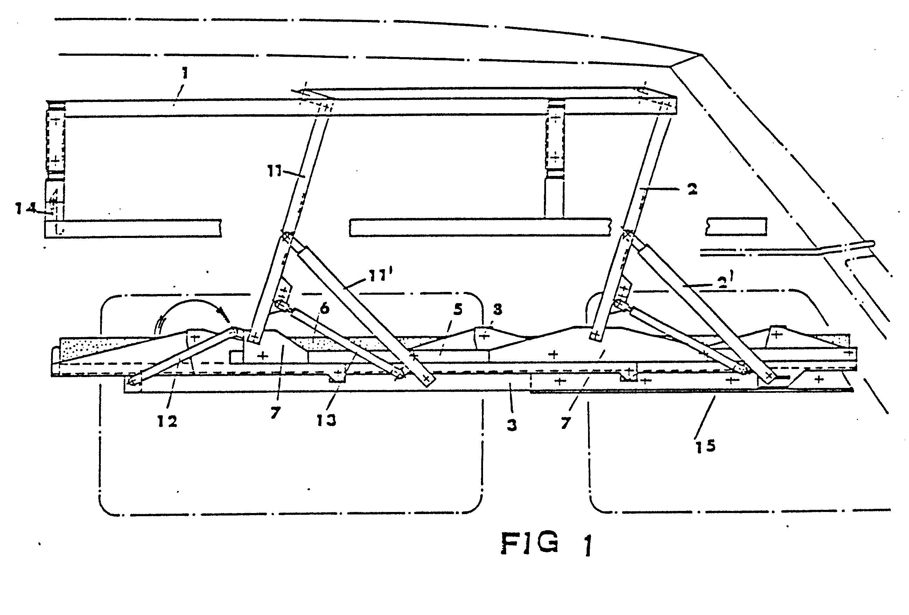

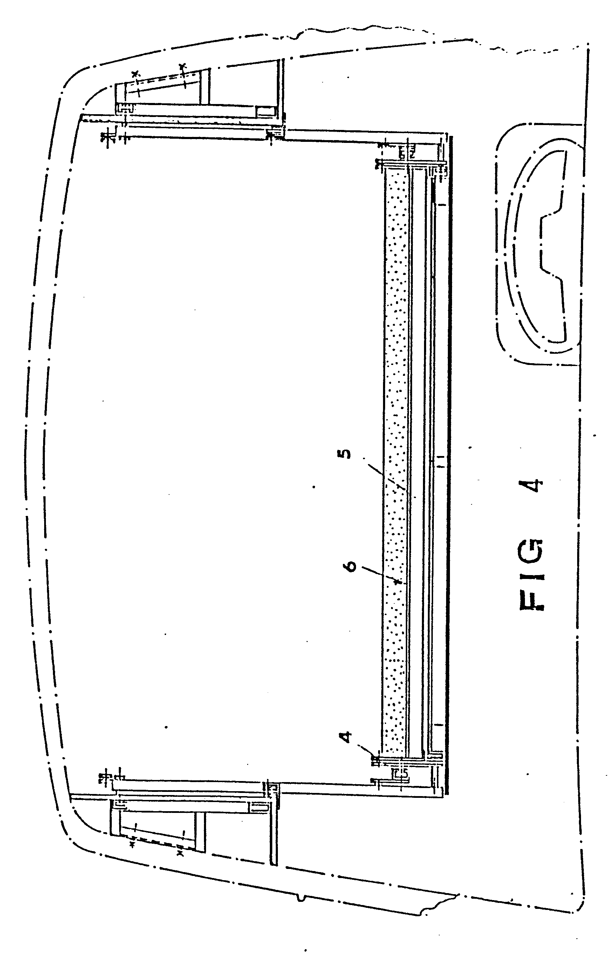

Wie in den Figuren 1 und 4 veranschaulicht kommt das ausgebreitete Bett auf der natürlich an beiden Seiten des Fahrzeuges vorgesehenen Struktur 3 zu liegen , derart um eine weitere Abstützung gegen die Gewichte zu finden , welche auf dem Bett selbst lasten könnten .

Die Querfestigkeit ist durch die Strukture selbst der faltbaren Bretter oder Flächen 5 gegeben , welche an den Längsenden aufliegen und an den Wangen 7 gebunden sind .

Bei der erläuterten Ausführungsform sind die Wangen 7 , und damit die Flächen 5 , untereinender scharniert , derart um sich bei ausgebreitetem Bett waagrecht und bei geschlossenem Bett vertikal anzuordnen .

Wie angedeutet sind die Wangen 7 an der Führung 4 gleitbar angelenkt , welche mit Hilfe der Arme 2,11 an der Verankerungsstruktur, oder am Streichbalken , 1 gebunden ist , die ihrerseits an der Wand des Fahrzeuges befestigt ist . Daraus ergibt sich , dass das Bett im rückgezogenen oder geschlossenen Zustand einen begrenzten Raum einnimmt , welcher z.B. in einem Camper der Teil

über dem Fahrstand sein kann , während der Rest des Fahrzeuges in vertikaler Richtung frei bleibt und für den normalen Tagesgebrauch bestimmt werden kann . Bei zum

Ausruhen vorbereitetem Bett sind die Flächen 5 gegen das Innere des Fahrzeuges gezogen , die Zapfen 10 haben ihren entsprechenden Führungsweg zurückgelegt und die Wangen 7 befinden sich in waagrechter Lage . Vorzugsweise und zwecks Verschaffung einer grösseren Biegefestigkeit sind die Flächen 5 an ihren Querkanten fassoniert , derart um eine zeitweilige gegenseitige Einspannung , z.B. eine Spundung , zu bilden .

Wie aus den Zeichnungen zu entnehmen ist , sind die Arme 2,11 an der Verankerungsstruktur , oder am Streichbalken , 1 gebunden und weichen von dieser ab , um die Führungen 4 in angemessener Weise abzustützen . Es sind natürlicherweise zwei Reihen von Armen 2,11 angegeben , es kann jedoch eine grössere oder kleinere Anzahl von diesen vorgesehen werden .

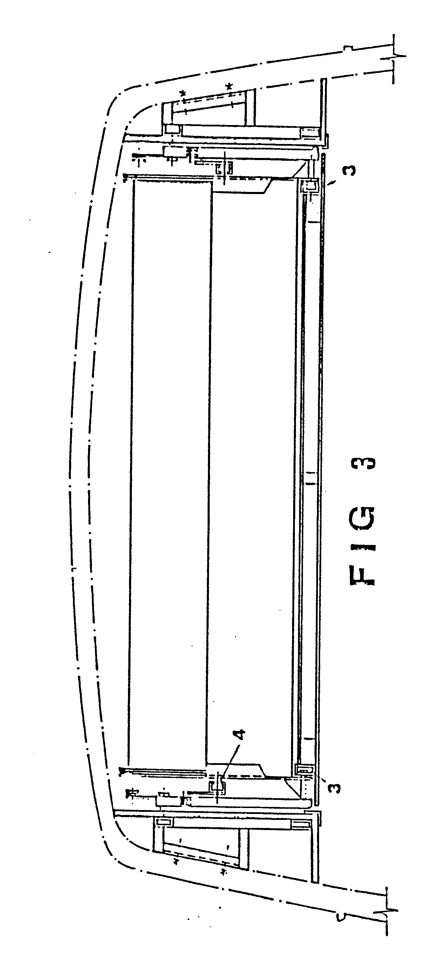

Es ist auch zu bemerken , dass die letzte zum Inneren des Fahrzeuges gewandte faltbare Fläche der faltbaren Flächen 5 von Hand betätigt wird , wobei sich alle anderen Flächen 5 mit den dazugehöigen Wangen 7 infolge der auf diese Fläche ausgeübte Wirkung in Bewegung setzen ; d.h. sowohl beim Öffnen als auch beim Schliessen des Bettes genügt es auf die erste Fläche 5 einzuwirken , welche - wie in Fig. 3 dargestellt - bei geschlossenem Bett die stirnseitige Verschlusswand des Gesamtheit des Bettes bildet und es dabei der Sicht verbirgt . Wie angegeben ist die genannte Fläche 5 von der Führung 4 unabhängig
gestaltet , da es auf diese Art nun möglich ist , ihr
Kippen und damit die Bewegung des Bettes auch und vorallem in dessen waagrechter Lage (Bett offen) zu bewerkstelligen , bei welcher der kleinste Abstand der beweglichen Struktur von einem gegenüberliegenden Hindernis
eine Handhabung entsprechend jener unmöglich machen würde , mit welcher man auf die rückwärtigen Flächen 5 einwirkt , welche mittels der Wangen 7 und der Zapfen 10 in
der Führung 4 gebunden sind . Es wird noch bemerkt , dass
bei Flächen 5 in vertikaler Lage und somit bei geschlossenem Bett Verankerungsmittel , wie z.B. ein Haken , 14
vorgesehen sind , um das Bett in dieser Stellung zu arretieren .

Die Arme 2,11 ausser   an    dem    zum vorderen Teil
des Fahrzeuges gerichteten Ende der Struktur  sind auch
wie in der Zeichnung veranschaulicht an der Mittellinie
gelegen , und aus naheliegenden Gründen auch am äussersten dieser gegenüberliegenden Teil , indem somit das
Stützorgan der Flächen 5 während des Gebrauches des Bettes
gebildet wird . Der letzte zum Inneren des Fahrzeuges gerichtete Arm 11 ist mit einem Vorsprung 12 versehen , welcher als Zugglied zwischen dem Arm 11 und dem Ende der
Auflagestruktur 3 wirkt . Ein am Ende dieser letzteren
vorgesehener Zapfen 15 verriegelt das .Brett 5 bei geöffnetem Bett und verhindert somit ein ungewünschtes Verschieben desselben . Es ist zu unterstreichen , dass die Arme 2,11,12 sowohl ad der Struktur 3 als auch an den Führungen 4 verschiedenartig gebunden sind , u.zw. sind die nicht ausdehnbaren Zweige 2,11 zwischen Streichbalken 1 und Führung 4 gebunden , während die ausdehnbaren Zweige 2',22' zwischen den Armen 2,11 und der Stützstruktur 3 gebunden sind . Auch der Vorsprung 12 ist zwischen dem Arm 11 und dem Ende der Struktur 3 gebunden . Pneumatische oder hydraulische Dämpfer 13 gegebenenfalls mit dazugehöriger Steuerungsbüche sind vorgesehen um die Mühe zu erleichtern , welche erforderlich ist um das Bett in die eine oder in die andere der beiden vorgesehenen Stellungen zu bringen .

Es ist auch vorgesehen , dass die am freien Ende des Bettes vorgesehenen pneumatischen Heber , bzw. Dämpfer , 13 ihren Angriffspunkt an der veränderlichen Armen haben können , derart um damit den von diesen ausgeübten Schub ändern zu können und dadurch praktisch ein automatisches Verschliessen und Öffnen des Bettes zu erlangen .

Weiters kann das Bett dem Fahrzeug gegenüber auch quer angeordnet werden anstatt der Länge nach , wie bisher beschrieben wurde , u.zw. unter Beseitigung von zwei faltbaren Brettern oder Flächen 5 .

Die vom erfindungsgemässen Bett gebotenen Vorteile sind handgreiflich . Insbesondere ist die Einfachheit der Handhabung zu unterstreichen , welche erforderlich ist um das Bett in Gebrauchsstellung oder Verschwindstellung zu bringen , sowie die Tatsache , dass das Bett in der rückgezogenen Stellung die Höhe nur um einen kleinsten Raumteil verringert und damit den Gebrauch des sich darunterbefindlichen Raumes zulässt , während es in der ausgebreiteten Stellung in zweckdienlicher Höhe positioniert ist , ohne dabei die darunterliegende Anordnung zu behindern . Wie erwähnt ist das erfindungsgemässe rückziehbare Bett besonders für enge Räumlichkeiten mit begrenzter Höhe , wie z.B. Campers , Wohnanhänger , Boote , usw. bestimmt , es kann jedoch auch in allen Mehrgebrauchsräumlichkeiten insbesondere in Einzelzimmern zur Anwendung kommen , bei welchen Zweckdienlichkeit und Ästhetik untereinander häufig zuwiderlaufen .

Das erfindungsgemässe rückziehbare Verschwindbett wurde vorstehend nur beispielsweise in nicht einzuschränkender Form beschrieben und erläutert . So wären natürlich z.B. noch alle jene Abänderungen möglich , welche sich bei der Herstellung und beim praktischen Gebrauch als nützlich erweisen könnten , ohne damit vom eigentlichen Erfindungsgedanken abzuweichen , welcher den nachstehenden Patentansprüchen nachmals zu entnehmen ist .

\*\*\*\*\*\*\*\*\*\*\*\*

Anmelder : CROCOLI   Pietro , Rom (Italien) .          −

"Rückziehbares Verschwindbett"

Patentansprüche

1.)Rückziehbares Verschwindbett , dadurch gekennzeichnet , dass es aus zwei Strukturen gebildet ist , u.zw.
eine an jeder von zwei entgegengesetzten Wänden feste
Struktur (1) und eine gegenüber der erstgenannten Struktur (1) bewegliche Struktur (3) .

2.)Rückziehbares Verschwindbett , nach Anspruch 1 ,
dadurch gekennzeichnet , dass die feste Struktur im wesentlichen aus zwei jeweils an zwei entgegengesetzten
Wänden des Raumes , in dem das Bett untergebracht werden
soll , fest verankerten Streichbalken (1) gebildet ist ,
wobei von diese Streichbalken (1) die bewegliche Struktur
(3) vorzugsweise mittels angelenkter Arme (2,11) herabhängt .

3.)Rückziehbares Verschwindbett , nach Anspruch 1
oder 2 , dadurch gekennzeichnet , dass die bewegliche
Struktur eine zur gleitbaren Aufnahme von Zapfen (10) geeignete Führung (4) umfasst , sowie weiters die genannten
Zapfen tragende Wangen (7) und eine vorzugsweise röhrenförmige Struktur , welche geeignet ist eine Auflage für
die Flächen (5) des eigentlichen Bettes zu bilden .

4.) Rückziehbares Verschwindbett , nach einem oder mehreren der vorstehenden Ansprüche , dadurch gekennzeichnet , dass die Wangen (7) gemäss Anspruch 3 die Gleitzapfen (10) ungefähr an ihrer Mittellinie tragen und untereinander an den entsprechenden Enden mittels Zapfen (8,9) gebunden sind , wobei die genenseitigen Bindungen so beschaffen sind , um eine balgenartige Verschliessung sowie eine Öffnung derselben zu ermöglichen .

5.) Rückziehbares Verschwindbett , nach Anspruch 2 und/oder 3 , dadurch gekennzeichnet , dass die Fläche des Bettes aus Brettern (5) gebildet ist , welche an gegenüberliegenden Wangenpaaren (7) befestigt und an den freien Enden mit Spundungen versehen sind , wobei die Bretter (5) und die darüberliegende Matratze (6) durch eine entsprechende Bewegung der Wagen (7) balgenartig verschlossen werden können .

6.) Rückziehbares Verschwindbett , nach einem oder mehreren der vorstehenden Ansprüche , dadurch gekennzeichnet , dass Arme (2,11) vorgesehen sind , welche die feste Struktur (1) mit der beweglichen Struktur (3) verbinden , wobei die gegenseitige Bewegung der verschiedenen Bestandteile z.B. durch pneumatische Heber (13) unterstützt wird .

7.) Rückziehbares Verschwindbett , nach einem oder mehreren der vorstehenden Ansprüche , dadurch gekennzeich-

0172146

net , dass die ortsfeste Struktur (1) bei geschlossenem
Bett durch bewegliche Bretter verborgen ist , wobei das
zurückgezogene Bett stirnseitig durch das letzte Brett
(5) und unterhalb durch eine Fläche abgedeckt ist , welche auch das Mittel zum Geradehalten der Auflageelemente
gemäss Anspruch 3 bildet .

\*\*\*\*\*\*\*\*\*\*\*

FIG 1

0172146

FIG 2

FIG 3

0172146

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | FR-A-2 356 392 (HYMER)<br>* Abbildungen 1,2; Ansprüche 1,2,11 * | 1,2,6 | A 47 C 17/80 |
| | --- | | |
| A | US-A-1 478 611 (LANE)<br>* Abbildungen 3,4,5 * | 4,5 | |
| | --- | | |
| A | US-A-3 745 595 (NAGY)<br>* Abbildungen; Anspruch 1 * | 1,2 | |
| | ----- | | |

**RECHERCHIERTE SACHGEBIETE (Int. Cl.4)**

A 47 C
B 60 P

Der vorliegende Recherchenbericht wurde für alle Patentansprüche erstellt.

| Recherchenort | Abschlußdatum der Recherche | Prüfer |
|---|---|---|
| DEN HAAG | 11-11-1985 | MYSLIWETZ W.P. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82